# EUROPÄISCHE PATENTSCHRIFT

(11) **EP 2 818 503 B1**
(45) Veröffentlichungstag und Bekanntmachung des Hinweises auf die Patenterteilung: **06.04.2016**
(21) Anmeldenummer: 13174034.2
(22) Anmeldetag: 27.06.2013
(51) Int. Cl.: C08K 5/00, B60C 1/00, B65G 15/32, C08L 21/00

(54) **KAUTSCHUKMISCHUNG MIT UMWELTFREUNDLICHEM WEICHMACHER**
RUBBER MIXTURE COMPRISING ENVIRONMENTALLY FRIENDLY SOFTENERS
MÉLANGE DE CAOUTCHOUC DOTÉ D'UN PLASTIFIANT NON POLLUANT

(43) Veröffentlichungstag der Anmeldung: 31.12.2014
(73) Patentinhaber: Continental Reifen Deutschland GmbH, 30165 Hannover (DE)
(72) Erfinder: Recker, Carla, 30167 Hannover (DE); Grosse, Julia, 30926 Seelze (DE); Becherer, Thomas, 30938 Burgwedel (DE); Müller, Sabine, 30161 Hannover (DE)
(74) Vertreter: Preusser, Andrea

(56) Entgegenhaltungen:
- WO-A1-2010/012531

## Beschreibung

Die Erfindung betrifft eine Kautschukmischung, insbesondere für Fahrzeugreifen, Gurte, Riemen und Schläuche.

Die Kautschukzusammensetzung des Laufstreifen bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Gute Griffigkeit und geringer Abrieb sind auch bei technischen Gummiartikeln, wie Gurte und Riemen, ein wichtiges Qualitätskriterium.

Um diese Zielkonflikte zu lösen, sind schon vielfältige Ansätze verfolgt worden. So hat man beispielsweise unterschiedlichste, auch modifizierte Polymere, Harze und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher eine andere wichtige Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, das Konfektionier- und das Klebverhalten zu verbessern und die physikalischen Eigenschaften der Mischung und der daraus hergestellten Vulkanisate zu beeinflussen.

Neben den üblicherweise in Kautschukmischungen verwendeten aromatischen, naphthenischen und paraffinischen Mineralölweichmachern gibt es verschiedene synthetische Weichmacher, die in Kautschukmischungen eingesetzt werden, wie z. B. Thioester, Phthalsäureester, aromatische Polyether, Phosphorsäureester, Sebacinsäureester oder niedrigmolekulare, polymere Polyester.

Die Produktion dieser Weichmacher ist allerdings kostenintensiv und benötigt viel Energie. Zum anderen werden dazu Rohstoffe, wie z.B. Erdöl, verwendet, die aus ökologischen Gesichtspunkten, vor allem im Bezug auf die gegebenen Schadstoffemissionen und Rohstoffknappheit, in Zukunft nicht mehr tragbar sind. Als Alternative gibt es Bestrebungen, Pflanzenöle als Weichmacher in Kautschukmischungen zu verwenden. Letztere stehen allerdings nicht in beliebigen Mengen für die Kautschukindustrie zur Verfügung.

Bezüglich der Verwendung der genannten Weichmacher sind folgende Druckschriften beispielhaft für eine weitere Vielzahl zu erwähnten:
In der EP 0 708 137 A1 werden Vulkanisate beschrieben, die zur Vermeidung des Auftretens von schwarzen Markierungen durch Abrieb und von Verfärbungen in der Ausgangskautschukmischung keine aromatischen Prozessöle enthalten, aber wenigstens einen Weichmacher (z. B. Dioctylphthalat), flüssiges Polymer und/oder Asphaltene und als Füllstoff Kieselsäure und Ruß im Volumenverhältnis 1:1 bis 20:1 aufweisen.

Aus der US 2002/0010275 A1 ist bekannt, einer Laufstreifenkautschukmischung 1 bis 20 phr eines niedermolekularen Polyesterweichmachers ausgewählt aus Polyestersebacat, Triethylenglycolcaprat-caprylat, Triethylenglycoldiheptanoat, Triethylenglycoldipelargonat und Triethylenglycoldi-2-ethylhexoat hinzuzufügen, wodurch der Laufstreifen weicher gemacht und das Traktionsverhalten von Hochleistungsreifen verbessert werden soll.

Kautschukmischungen für Reifen, die zur Verbesserung der Verarbeitbarkeit ohne Nachteile in anderen Eigenschaften verstärkende Füllstoffe und einen Ester enthalten, werden in der US 2002/0042462 A1 offenbart. Der Ester ist dabei ausgewählt aus einem Ester einer aliphatischen, polyvalenten Carbonsäure mit einem Polyoxyalkylenderivat und einem Ester aus einer aromatischen, polyvalenten Carbonsäure mit einem Polyoxyalkylenderivat.

Die US 4,737,535 beschreibt Reifen, die verbesserte Haftungseigenschaften, Fahrstabilität und Tieftemperatureigenschaften aufweisen sollen. Die Reifen weisen Laufstreifen aus einer Kautschukmischung auf, die 15 bis 50 phr SSBR, zumindest einen Weichmacher, ausgewählt aus einem Sebacinsäureester, einem Adipinsäureester und einem Fettsäureester, und Ruß enthält.

Die Verwendung von Proteinen aus Ölsaaten oder Sonnenblumenöl als Weichmacher in Kautschukmischungen insbesondere für Fahrzeugluftreifen ist aus der DE 101 08 981 A1 und der DE 602 18 446 T2 bekannt. Die dort beschriebenen Pflanzenöle können als alleiniger Weichmacher eingesetzt werden, meist werden sie aber in Kombination mit einem weiteren, aus Erdöl gewonnenen, Weichmacher verwendet.

Ferner ist aus der WO 2010/012531 A1 eine Kautschukmischung, insbesondere für Fahrzeugluftreifen, bekannt, die einen Weichmacher enthält, wobei der Weichmacher frei von polyzyklischen Aromaten ist und durch bspw. einen Biomasse-zu-Flüssigkeit-Prozess entstanden ist.

Aus dem Schwerölanteil nach einer Direktverflüssigung von Biomassen gewonnene Weichmacher haben allerdings den Nachteil einer hohen Sauerstoffkonzentration. Ein zu hoher Sauerstoffgehalt des Weichmachers verursacht in der Anwendung in Kautschukmischungen vergleichsweise schlechten physikalischen Eigenschaften, wie z.B. eine geringeren Steifigkeit und einen größeren Rollwiderstand.

Der Erfindung liegt daher die Aufgabe zu Grunde, eine Kautschukmischung enthaltend zumindest einen polaren oder unpolaren Kautschuk und zumindest einen hellen und/oder dunklen Füllstoff, insbesondere für Fahrzeugluftreifen, Gurte, Riemen und Schläuche, bereitzustellen, die zumindest einen alternativen und umweltfreundlichen Weichmacher enthält, der durch ein im Vergleich zum Stand der Technik effizienteres und somit ökologisch wertvolleres Verfahren hergestellt wurde und dessen Qualität für die Anwendung in Kautschukmischungen im Vergleich zu umweltfreundlichen Weichmachern aus dem Stand der Technik verbessert ist. Die erhöhte Qualität soll sich in den physikalischen Eigenschaften, wie der Steifigkeit und dem Rollwiderstandsverhalten, der Kautschukmischung wiederspiegeln. Gleichzeitig soll der alternative und umweltfreundliche Weichmacher ein Ersatz für übliche im Stand der Technik bekannte Weichmacher, insbesondere Mineralölweichmacher sein, wobei das Niveau der physikalischen Eigenschaften der Kautschukmischung durch den Austausch des Weichmachers nicht signifikant verschlechtert bzw. verbessert werden soll. Hierdurch soll die Nachhaltigkeit und Umweltverträglichkeit von Kautschukmischungen erhöht werden und es soll eine Unabhängigkeit gegenüber Erdöl als Rohstoffquelle und Energiequelle gewährleistet werden.

Gelöst wird diese Aufgabe dadurch, dass die Kautschukmischung, enthaltend zumindest einen polaren oder unpolaren Kautschuk und zumindest einen hellen und/oder dunklen Füllstoff, wenigstens die folgenden Bestandteile enthält:
- zumindest einen Weichmacher, wobei der Weichmacher gemäß Elementaranalyse einen Sauerstoffgehalt von 0 bis 7 Gew.-% aufweist, und aus einem Öl aus nicht-fossilen Quellen stammt, wobei er durch thermische Umwandlung von Pflanzenöl entstanden ist.

Überraschenderweise wurde gefunden, dass zumindest ein Weichmacher, der einen Sauerstoffgehalt von 0 bis 7 Gew.-% aufweist, und der aus einem Öl aus nicht-fossilen Quellen stammt, in einer Kautschukmischung enthaltend zumindest einen polaren oder unpolaren Kautschuk und zumindest einen hellen und/oder dunklen Füllstoff, anstelle von im Stand der Technik bekannten Weichmachern, insbesondere Mineralölweichmachem, eingesetzt werden kann, ohne dass Einbußen in dem Niveau der physikalischen Eigenschaften der Kautschukmischung hingenommen werden müssen.
Zudem zeigen sich bei dem Einsatz des Weichmachers, der einen Sauerstoffgehalt von 0 bis 7 Gew.-% aufweist, gegenüber herkömmlichen Pflanzenölen mit einem höheren Sauerstoffgehalt, wie Rapsöl mit 10 bis 15 Gew.-% Sauerstoff, verbesserte physikalische Eigenschaften, insbesondere eine höhere Steifigkeit und ein verbessertes Rollwiderstandsverhalten.
Gleichzeitig basiert der Weichmacher, der einen Sauerstoffgehalt von 0 bis 7 Gew.-% aufweist, nicht auf Erdöl, so dass hier eine Unabhängigkeit gegenüber dieser Rohstoff- und Energiequelle existiert. Somit wird eine bessere Nachhaltigkeit und Umweltverträglichkeit von Kautschukmischungen gewährleistet.
Auch wenn die Kautschukmischung neben den genannten Füllstoffen und Kautschuken weitere in der Kautschukindustrie übliche Zusatzstoffe, wie unten erläutert, enthält, kann der Weichmacher als kompletter Ersatz von Mineralölweichmachern oder herkömmlichen Pflanzenölen, wie Rapsöl, eingesetzt werden.
Relevant ist hierbei, dass die physikalischen Eigenschaften der Kautschukmischung zumindest auf gleichem Niveau verbleiben und/oder sogar verbessert werden. Dies gilt nicht nur für den Fahrzeuglaufstreifen, bei geteiltem Laufstreifen insbesondere für die Base, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen, Gurte und Schläuche. Diese technischen Gummiartikel finden im täglichen Leben überall Verwendung, z.B. in Aufzügen, in der Automobilindustrie, in der Rohstoffindustrie, in der Lebensmittelindustrie und in der Medizintechnik. Daher kommt auch hier der verbesserten Umweltverträglichkeit bei gleich bleibenden Mischungseigenschaften eine zentrale Bedeutung zu.

Die Kautschukmischung enthält zumindest einen polaren oder unpolaren Kautschuk. Der polare oder unpolare Kautschuk ist dabei ausgewählt aus der Gruppe, bestehend aus natürlichem Polyisopren und/oder synthetischem Polyisopren und/oder Butadien-Kautschuk und/oder lösungspolymerisiertem Styrolbutadienkautschuk und/oder emulsionspolymerisiertem Styrolbutadienkautschuk und/oder Flüssigkautschuken und/oder Halobutylkautschuk und/oder Polynorbomen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydriertem Acrylnitrilbutadienkautschuk und/oder Isopren-Butadien-Copolymer und/oder hydriertem Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Bevorzugt ist es allerdings, wenn die Kautschukmischung natürliches und/oder synthetisches Polyisopren enthält und zwar in Mengen von 0 bis 50 phr, bevorzugt 0 bis 40 phr, besonders bevorzugt in Mengen von 0 bis 30 phr, wenigstens aber 0,1 phr, insbesondere 0,1 bis 30 phr.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

In einer besonderen Ausführungsform handelt es sich bei dem polaren oder unpolaren Kautschuk um einen Butadien-Kautschuk, der hydriert sein kann. Der Butadien-Kautschuk wird vorzugsweise in Mengen von 2 bis 60 phr, bevorzugt in Mengen von 2 bis 50 phr, besonders bevorzugt in Mengen von 5 bis 50 phr, ganz besonders bevorzugt in Mengen von 10 bis 50 phr und wiederum besonders bevorzugt in Mengen von 10 bis 46 phr verwendet.

Der polare oder unpolare Kautschuk kann ein Styrolbutadienkautschuk sein, der bevorzugt lösungspolymerisiert oder emulsionspolymerisiert ist. Der Styrolbutadienkautschuk kann hydriert sein und ist in einer besonders vorteilhaften Ausführungsform lösungspolymerisiert.
Des Weiteren kann der Styrolbutadienkautschuk mit Hydroxygruppen und/oder Epoxygruppen und/oder Siloxangruppen und/oder Aminogruppen und/oder Aminosiloxan und/oder Carboxygruppen und/oder Phthalocyaningruppen modifiziert sein. Es kommen aber auch weitere, dem Fachmann bekannte, Modifizierungen, auch als Funktionalisierungen bezeichnet, in Frage.
Der Styrolbutadienkautschuk findet in Mengen von 2 bis 98 phr, bevorzugt 2 bis 90 phr, besonders bevorzugt 2 bis 80 phr, wiederum besonders bevorzugt in Mengen von 5 bis 80 phr, Verwendung in der erfindungsgemäßen Kautschukmischung.

Gemäß einer vorteilhaften Weiterbildung der Erfindung enthält die erfindungsgemäße Kautschukmischung wenigstens zwei Kautschuktypen. Hierbei ist der Kautschuk ausgewählt aus der Gruppe bestehend aus natürlichem Polyisopren und/oder synthetischem Polyisopren und/oder Butadien-Kautschuk und/oder lösungspolymerisiertem Styrolbutadienkautschuk und/oder emulsionspolymerisiertem Styrolbutadienkautschuk. Eine derartige Kautschukmischung mit wenigstens zwei dieser Kautschuke und dem oben genannten Weichmacher, der einen Sauerstoffgehalt von 0 bis 7 Gew.-% aufweist, ist besonders für die Herstellung von umweltfreundlichen und rollwiderstandsarmen Fahrzeugluftreifen, insbesondere deren Laufstreifen, geeignet.

Gemäß einer weiteren vorteilhaften Weiterbildung der Erfindung enthält die erfindungsgemäße Kautschukmischung wenigstens drei Kautschuktypen. Hierbei ist der Kautschuk ausgewählt aus der Gruppe bestehend aus natürlichem Polyisopren und/oder synthetischem Polyisopren und/oder Butadien-Kautschuk und/oder lösungspolymerisiertem Styrolbutadienkautschuk und/oder emulsionspolymerisiertem Styrolbütadienkautschuk.
Eine derartige Kautschukmischung mit wenigstens drei dieser Kautschuke und dem oben genannten Weichmacher, der einen Sauerstoffgehalt von 0 bis 7 Gew.-% aufweist, ist besonders für die Herstellung von umweltfreundlichen und rollwiderstandsarmen Fahrzeugluftreifen, insbesondere deren Laufstreifen, geeignet.

Die erfindungsgemäße Kautschukmischung enthält des Weiteren zumindest einen hellen und/oder dunklen Füllstoff. Die Gesamtmenge an Füllstoff kann somit nur aus hellem oder dunklem Füllstoff oder aus einer Kombination von hellen und dunklen Füllstoffen bestehen.
Bevorzugt ist es, wenn der helle Füllstoff Kieselsäure, bevorzugt Fällungskieselsäure ist.

Die erfindungsgemäße Kautschukmischung enthält 0 bis 300 phr, bevorzugt 1 bis 250 phr, besonders bevorzugt 1 bis 200 phr, wiederum besonders bevorzugt 1 bis 150 phr, wiederum ganz besonders bevorzugt 1 bis 100 phr, Kieselsäure. Von dieser Gesamtmenge an Kieselsäure können 0 bis 100 % durch ein Kupplungsagens, bevorzugt ein Silan, an die Polymermatrix angebunden werden und/oder 0 bis 100 % nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, , besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 125 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Falls ein Kupplungsagens, in Form von Silan oder einer siliziumorganischen Verbindung, verwendet wird, so beträgt die Menge des Kupplungsagens 0 bis 20 phr, bevorzugt 0,1 bis 15 phr, besonders bevorzugt 0,5 bis 10 phr. Bevorzugt wird ein Kupplungsagens, in Form von Silan oder einer siliziumorganischen Verbindung, verwendet. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden. Die Menge des Kupplungsagens beträgt bevorzugt 0,1 bis 20 phr, besonders bevorzugt 1 bis 15 phr.

Bei dem dunklen Füllstoff handelt es sich bevorzugt um Ruß und zwar bevorzugt in Mengen von 0 bis 100 phr, besonders bevorzugt in Mengen von 0 bis 80 phr, wenigstens aber 0,1 phr, insbesondere wenigstens aber 0,5 phr, zumindest eines Rußes. Enthält die erfindungsgemäße Kautschukmischung Ruß, wird bevorzugt ein Ruß eingesetzt, der eine Jodadsoiptionszahl gemäß ASTM D 1510 von 30 g/kg bis 250 g/kg, bevorzugt 30 bis 180 g/kg, besonders bevorzugt 40 bis 180 g/kg, und ganz besonders bevorzugt 40 bis 130 kg/g und eine DBP-Zahl gemäß ASTM D 2414 von 80 bis 200 ml/100 g, bevorzugt 100 bis 200 ml/100g, besonders bevorzugt 115 bis 200 ml/100g, aufweist.

Die Verwendung eines solchen Rußtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden.

Erfindungswesentlich ist, dass die Kautschukmischung zumindest einen Weichmacher, der einen Sauerstoffgehalt von 0 bis 7 Gew.-% aufweist, und der aus einem Öl aus nicht-fossilen Quellen stammt, enthält.
Bisher werden Weichmacheröle in der Regel auf der Basis von Erdöl erzeugt, dessen Vorrat begrenzt ist, da es sich um eine endliche fossile Quelle handelt.
Um eine Unabhängigkeit von Erdöl als Rohstoff- und Energiequelle zu erlangen und gleichzeitig eine verbesserte Umweltverträglichkeit zu erzielen, entsteht der Weichmacher, der einen Sauerstoffgehalt von 0 bis 7 Gew.-% aufweist, und der aus einem Öl aus nicht-fossilen Quellen stammt, durch thermische Umwandlung des Öls aus nicht-fossilen Quellen.
Unter "Öl aus nicht-fossilen Quellen" wird im Rahmen der vorliegenden Anmeldung verstanden, dass das Öl nicht wie Erdöl, das ein fossiler Energieträger ist, aus erdgeschichtlicher Zeit weit zurückstammenden Quellen stammt. Somit soll der Weichmacher, der in der erfindungsgemäßen Kautschukmischung vorhanden ist, eindeutig von Erdöl abgegrenzt werden.
Gleichzeitig soll der Weichmacher, der einen Sauerstoffgehalt von 0 bis 7 Gew.-% aufweist, von bekannten Ölen aus nicht-fossilen Quellen abgegrenzt werden. Diese basieren zwar auch nicht auf Erdöl, allerdings weisen sie einen vergleichsweise hohen Sauerstoffgehalt auf.
Durch die thermische Umwandlung des Öls aus nicht-fossilen Quellen wird der Sauerstoffgehalt verringert, sodass der in der erfindungsgemäßen Kautschukmischung enthaltene Weichmacher einen geringeren Sauerstoffgehalt aufweist, als das Öl aus nicht-fossilen Quellen, aus dem er mittels der thermischen Umwandlung hergestellt wird.

Die Messung des Sauerstoffgehaltes erfolgt mittels Elementaranalyse. Über die Messung des Heizwertes wird die Bestimmung des Sauerstoffgehaltes verbessert.

Erfingdungsgemäß ist der in der erfindungsgemäßen Kautschukmischung enthaltene Weichmacher, der einen Sauerstoffgehalt von 0 bis 7 Gew.-% aufweist, und aus einem Öl aus nicht-fossilen Quellen stammt, durch thermische Umwandlung von Pflanzenöl entstanden.

Besonders bevorzugt ist es, wenn der in der erfindungsgemäßen Kautschukmischung enthaltene Weichmacher der einen Sauerstoffgehalt von 0 bis 7 Gew.-% aufweist, und aus einem Öl aus nicht-fossilen Quellen stammt, durch thermische Umwandlung von Rapsöl entstanden ist.

Bevorzugt ist es zudem, wenn der Weichmacher, der einen Sauerstoffgehalt von 0 bis 7 Gew.-% aufweist, und aus einem Öl aus nicht-fossilen Quellen stammt, nach Beendigung der thermischen Umwandlung als Schwerölanteil in der Sumpfphase vorliegt.

Überraschenderweise wurde gefunden, dass diese Schwerölanteile als Weichmacher, insbesondere als Weichmacheröl, für Kautschukmischungen geeignet sind, wenn der Sauerstoffgehalt des entstehenden Weichmacheröls im Vergleich zu dem Öl aus nicht-fossilen Quellen herabgesetzt wird.
Beispielsweise wird aus Rapsöl mit einem Sauerstoffgehalt von 10 bis 13 Gew.-% ein Weichmacher mit 4 bis 6 Gew.-%, bevorzugt 4 oder 5 Gew.-%, Sauerstoff hergestellt.

Ein weiterer Vorteil bei der Verwendung von Pflanzenölen als Quelle für den Weichmacher, der einen Sauerstoffgehalt von 0 bis 7 Gew.-% aufweist, ist, dass diese gar keine oder nur in sehr geringem Maße polyzyklische Aromaten aufweisen. Polyzyklische Aromaten sind als besonders umweltkritisch einzustufen und finden sich in der Regel in vielen Substanzen, hier insbesondere Weichmachern, die auf Erdöl als Rohstoff basieren. Frei von polyzyklischen Aromaten, auch als polyzyklische aromatische Kohlenwasserstoffe bezeichnet, bedeutet, dass der Gehalt an Benzo(a)pyren in dem Weichmacher kleiner 1 mg / kg und die Summe - nach der Direktive 76/769/EEC der Europäischen Gemeinschaft - von Benz(a)anthracen, Chrysen, Benzo(b)flouranthen, Benzo(j)fluoranthen, Benzo(k)fluoranthen, Benzo(e)pyren, Benzo(a)pyren und Dibenz(a,h)anthracen kleiner 10 mg / kg sein muss.

Der Weichmacher, der einen Sauerstoffgehalt von 0,1 bis 7 Gew.-% aufweist, wird in Mengen von 0,1 bis 150 phr, bevorzugt in Mengen von 0,1 bis 120 phr, besonders bevorzugt in Mengen von 0,1 bis 100 phr, wiederum besonders bevorzugt in Mengen von 0,1 bis 80 phr, wiederum ganz besonders bevorzugt in Mengen von 0,1 bis 60 phr, verwendet.

Es können in der Kautschukmischung noch 0 bis 5 phr zumindest eines weiteren zusätzlichen Weichmachers vorhanden sein. Dieser weitere Weichmacher ist ausgewählt aus der Gruppe, bestehend aus Mineralölen und/oder synthetischen Weichmachern und/oder Fettsäuren und/oder Fettsäurederivaten und/oder Harzen und/oder Faktisse und/oder Glyceriden und/oder Terpenen. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Bevorzugt ist jedoch außer zumindest einem Weichmacher, der einen Sauerstoffgehalt von 0 bis 7 Gew.-% aufweist, kein weiterer Weichmacher in der erfindungsgemäßen Kautschukmischung vorhanden. d.h. die Kautschukmischung ist frei von einem weiteren Weichmacher und enthält somit 0 phr der genannten Weichmacher.

Weiterhin kann die Kautschukmischung weitere, in der Kautschukindustrie übliche, Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze, und
e) Mastikationshilfsmittel, wie z. B. 2,2'-Dibenzamidodiphenyldisulfid (DBD).

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden. Weitere Zusatzstoffe beinhaltet zudem das Vernetzungssystem (Vernetzer, Schwefelspendern und/oder elementaren Schwefel, Beschleuniger und Verzögerer).
Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigem und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).
In einer bevorzugten Ausführungsform der Erfindung enthält die Kautschukmischung zumindest TBBS als Beschleuniger. Hierdurch werden besonders gute Reißeigenschaften der Kautschukmischung erzielt.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, einen Fahrzeugreifen bereitzustellen, der zumindest in einem Bauteil zumindest einen alternativen und umweltfreundlichen Weichmacher enthält, der durch ein im Vergleich zum Stand der Technik effizienteres und somit ökologisch wertvolleres Verfahren hergestellt wurde und dessen Qualität für die Anwendung in Kautschukmischungen im Vergleich zu umweltfreundlichen Weichmachern aus dem Stand der Technik verbessert ist. Die erhöhte Qualität soll sich in den physikalischen Eigenschaften, wie der Steifigkeit und dem Rollwiderstandsverhalten, des Fahrzeugreifens wiederspiegeln.

Gelöst wird diese Aufgabe dadurch, dass der Fahrzeugreifen in wenigstens einem Bauteil wenigstens eine wie oben beschriebene erfindungsgemäße Kautschukmischung enthält, wobei alle oben genannten Ausführungsformen der Kautschukmischung beinhaltet sind. Bevorzugt handelt es sich um einen Fahrzeugluftreifen. Bevorzugt ist das Bauteil die Cap und/oder die Base eines Laufstreifens und/oder eine Seitenwand und/oder ein inneres Bauteil.

Der Erfindung liegt weiterhin die Aufgabe zu Grunde, obig beschriebene Kautschukmischung, zur Herstellung von Fahrzeugreifen, insbesondere zur Herstellung des Laufstreifens eines Reifens und/oder einer Body-Mischung eines Fahrzeugluftreifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Zur Verwendung der erfindungsgemäßen Kautschukmischung in Schläuchen wird häufig keine so genannte Schwefelvernetzung, sondern eine peroxidische Verletzung bevorzugt.

Die Herstellung der Schläuche erfolgt analog dem im Handbuch der Kautschuktechnologie, Dr. Gupta Verlag, 2001, Kapitel 13.4 beschriebenen Verfahren. Aufgrund der umweltfreundlichen Eigenschaften und der durch die gemäß Direktive 76/769/EEC vorhandenen Freiheit von polyzyklischen Aromaten bedingten geringen Cancerogenität findet die erfindungsgemäße Kautschukmischung insbesondere in Lebensmittelschläuchen, hier vor allem Trinkwasserschläuchen, Medizin- und Pharmaschläuchen Verwendung.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei Raumtemperatur und 70°C gemäß DIN 53 512
- Spannungswerte bei 100 und 300 % Dehnung bei Raumtemperatur gemäß DIN 53 504
- Zugfestigkeit bei Raumtemperatur gemäß DIN 53 504
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529

**Tabelle 1**

| **Bestandteile** | **Einheit** | **V1** | **V2** | **E1** | **V3** | **E2** |
|---|---|---|---|---|---|---|
| Polyisopren^{a} | phr | 10 | 10 | 10 | 20 | 20 |
| BR^{b} | phr | 18 | 18 | 18 | 44 | 44 |
| SSBR^{c} | phr | 72 | 72 | 72 | 36 | 36 |
| Kieselsäure^{d} | phr | 95 | 95 | 95 | 95 | 95 |
| Mineralöl TDAE^{e} | phr | 35 | - | - | 45 | - |
| Rapsöl^{f} | phr | - | 35 | - | - | - |
| Weichmacher^{g} | phr | - | - | 35 | - | 45 |
| ZnO | phr | 2,5 | 2,5 | 2,5 | 2,5 | 2,5 |
| Stearinsäure | phr | 2,5 | 2,5 | 2,5 | 2,5 | 2,5 |
| Silan^{h} | phr | 6,84 | 6,84 | 6,84 | 6,84 | 6,84 |
| DPG, TBBS, Schwefel | phr | 6 | 6 | 6 | 5,6 | 5,6 |

| Eigenschaften | | | | | | |
|---|---|---|---|---|---|---|
| Härte bei RT | Shore A | 75 | 70 | 75 | 67 | 66 |
| Rückprall bei RT | % | 25,4 | 31,4 | 26,8 | 29 | 28 |
| Rückprall bei 70°C | % | 45,8 | 42,9 | 45,4 | 44 | 41 |
| Diff. Rückpr. (70 °C - RT) | | 20,4 | 11,5 | 19,6 | 15 | 13 |
| Spannungswert 100% | MPa | 3,5 | 2 | 3 | 1,2 | 1,2 |
| Spannungswert 300% | MPa | 11 | 7 | 10 | 6,2 | 5,3 |
| Zugfestigkeit bei RT | MPa | 13 | 12 | 13 | 14 | 14 |
| t₁₀ | Min. | 3,3 | 3,7 . | 1,9 | 2,1 | 0,8 |
| t₉₀ | Min. | 15,6 | 15,2 | 11,3 | 12 | 6 |

| | | | | | | |
|---|---|---|---|---|---|---|
| Verwendete Substanzen aus Tabelle 1: ^{a} TSR ^{b} High-cis Polybutadien , cis-Anteil ≥ 95 Gew. -% ^{c} SSBR Styrolbutadienkautschuk, NIPOL NS116 R, Firma Zeon Corporation ^{d} VN3, Fa. Evonik ^{e} TDAE: BP, Vivatec 500, Fa. Klaus Dahleke KG ^{f} Rapsöl: Rapseed Oil, Fa. Saipol ^{g} Weichmacher mit einem Sauerstoffanteil von 4 Gew.-%, der durch thermische Umwandlung aus Rapsöl (Sauerstoffanteil 11 Gew.-%) entstanden ist. ^{h} Silan: SG SI996, Nanjing Shuguang Silane Co., Ltd | | | | | | |

Aus Tabelle 1 geht hervor, dass durch die Verwendung von Weichmachern, die einen Sauerstoffgehalt von 0,1 bis 7 Gew.-% aufweisen, die Mischungseigenschaftender erfindungsgemäßen Kautschukmischungen E1 und E2 gegenüber den Vergleichsmischungen mit dem Mineralölweichmacher TDAE V1 und V3 auf annähernd gleichem Niveau verbleiben.
Die Mischungshärten verbleiben nahezu konstant und auch das Nassbremsverhalten, dargestellt durch den Rückprall bei Raumtemperatur, und das ökologisch relevante Rollwiderstandsverhalten, dargestellt durch den Rückprall bei 70°C, sind im Rahmen der Messgenauigkeit bei den erfindungsgemäßen Kautschukmischungen E1 und E2 im Vergleich zu den Vergleichsmischungen V1 bis V3 gleich geblieben. Insbesondere zeigt die erfindungsgemäße Kautschukmischung E1 gegenüber der Vergleichsmischung V2 mit Rapsöl aus dem Stand der Technik deutlich bessere Eigenschaften hinsichtlich des Zielkonfliktes Rollwiderstand vs. Nassgriff.
Selbiges lässt sich auch für die Reißeigenschaften, dargestellt durch die Spannungswerte und die Zugfestigkeit, feststellen.
Die Kautschukmischungen E1 und E2 weisen dabei insbesondere eine geringere Umsatzzeit bei 90 % (t90) als die Vergleichsmischungen auf, was ein ökonomisch günstigeres Heizen von Bauteilen aus den Mischungen E1 und E2 ermöglicht.

## Patentansprüche

1. Kautschukmischung enthaltend
- zumindest einen polaren oder unpolaren Kautschuk und
- zumindest einen hellen und/oder dunklen Füllstoff
**dadurch gekennzeichnet, dass** sie wenigstens folgende Bestandteile enthält:
- zumindest einen Weichmacher, wobei der Weichmacher gemäß Elementaranalyse einen Sauerstoffgehalt von 0 bis 7 Gew.-% aufweist, und aus einem Öl aus nicht-fossilen Quellen stammt, wobei er durch thermische Umwandlung von Pflanzenöl entstanden ist.

2. Kautschukmischung nach Anspruch 1, **dadurch gekennzeichnet, dass** der polare oder unpolare Kautschuk ausgewählt ist aus der Gruppe, bestehend aus natürlichem Polyisopren und/oder synthetischem Polyisopren und/oder Butadien-Kautschuk und/oder lösungspolymerisiertem Styrolbutadienkautschuk und/oder emulsionspolymerisiertem Styrolbutadienkautschuk und/oder Flüssigkautschuken und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydriertem Acrylnitrilbutadienkautschuk und/oder Isopren-Butadien-Copolymer und/oder hydriertem Styrolbutadienkautschuk.

3. Kautschukmischung nach Anspruch 1 oder 2, **dadurch gekennzeichnet, dass** der helle Füllstoff Kieselsäure ist.

4. Kautschukmischung nach einem der Ansprüche 1 bis 3, **dadurch gekennzeichnet, dass** es sich bei dem dunklen Füllstoff um Ruß handelt.

5. Kautschukmischung nach einem der Ansprüche 1 bis 4, **dadurch gekennzeichnet, dass** der Weichmacher, der einen Sauerstoffgehalt von 0 bis 7 Gew.-% aufweist, und aus einem Öl aus nicht-fossilen Quellen stammt, durch thermische Umwandlung von Rapsöl entstanden ist.

6. Kautschukmischung nach einem der Ansprüche 1 bis 5, **dadurch gekennzeichnet, dass** der Weichmacher, der einen Sauerstoffgehalt von 0 bis 7 Gew.-% aufweist, und aus einem Öl aus nicht-fossilen Quellen stammt, nach Beendigung der thermischen Umwandlung als Schwerölanteil in der Sumpfphase vorliegt.

7. Fahrzeugreifen, **dadurch gekennzeichnet, dass** er in wenigstens einem Bauteil wenigstens eine Kautschukmischung nach einem der Ansprüche 1 bis 6 enthält.

8. Verwendung einer Kautschukmischung nach einem der Ansprüche 1 bis 6 zur Herstellung eines Fahrzeugreifens.

## Claims

1. Rubber mixture containing:
- at least one polar or nonpolar rubber and
- at least one pale and/or dark filler,
**characterized in that** it contains at least the following constituents:
- at least one plasticizer, the plasticizer having an oxygen content of 0 to 7 wt% by elemental analysis, and originating from an oil from non-fossil sources, having been formed by thermal conversion of vegetable oil.

2. Rubber mixture according to Claim 1, **characterized in that** the polar or nonpolar rubber is selected from the group consisting of natural polyisoprene and/or synthetic polyisoprene and/or butadiene rubber and/or solution-polymerized styrene-butadiene rubber and/or emulsion-polymerized styrene-butadiene rubber and/or liquid rubbers and/or halobutyl rubber and/or polynorbornene and/or isoprene-isobutylene copolymer and/or ethylene-propylene-diene rubber and/or nitrile rubber and/or chloroprene rubber and/or acrylate rubber and/or fluoro rubber and/or silicone rubber and/or polysulfide rubber and/or epichlorohydrin rubber and/or styrene-isoprene-butadiene terpolymer and/or hydrogenated acrylonitrile-butadiene rubber and/or isoprene-butadiene copolymer and/or hydrogenated styrene-butadiene rubber.

3. Rubber mixture according to Claim 1 or 2, **characterized in that** the pale filler is silica.

4. Rubber mixture according to any of Claims 1 to 3, **characterized in that** the dark filler is carbon black.

5. Rubber mixture according to any of Claims 1 to 4, **characterized in that** the plasticizer, which has an oxygen content of 0 to 7 wt%, and originates from an oil from non-fossil sources, has been formed by thermal conversion of rapeseed oil.

6. Rubber mixture according to any of Claims 1 to 5, **characterized in that** the plasticizer, which has an oxygen content of 0 to 7 wt%, and originates from an oil from non-fossil sources, is present as heavy oil fraction in the liquid phase after the end of the thermal conversion.

7. Vehicle tire, **characterized in that** it contains at least one rubber mixture according to any of Claims 1 to 6 in at least one component.

8. Use of a rubber mixture according to any of Claims 1 to 6 for producing a vehicle tire.

## Revendications

1. Mélange de caoutchouc, contenant :
- au moins un caoutchouc polaire ou apolaire, et
- au moins une charge claire et/ou sombre, **caractérisé en ce qu'**il contient au moins les constituants suivantes :
- au moins un plastifiant, le plastifiant présentant selon l'analyse élémentaire une teneur en oxygène de 0 à 7 % en poids, et provenant d'une huile d'origine non fossile, ledit plastifiant étant produit par transformation thermique d'une huile végétale.

2. Mélange de caoutchouc selon la revendication 1, **caractérisé en ce que** le caoutchouc polaire ou apolaire est choisi dans le groupe constitué par le polyisoprène naturel et/ou le polyisoprène synthétique et/ou le caoutchouc de butadiène et/ou le caoutchouc de styrène-butadiène polymérisé en solution et/ou le caoutchouc de styrène-butadiène polymérisé en émulsion et/ou les caoutchoucs liquides et/ou le caoutchouc d'halobutyle et/ou le polynorbornène et/ou le copolymère d'isoprène-isobutylène et/ou le caoutchouc d'éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc de polysulfure et/ou le caoutchouc d'épichlorhydrine et/ou le terpolymère de styrène-isoprène-butadiène et/ou le caoutchouc d'acrylonitrile-butadiène hydrogéné et/ou le copolymère d'isoprène-butadiène et/ou le caoutchouc de styrène-butadiène hydrogéné.

3. Mélange de caoutchouc selon la revendication 1 ou 2, **caractérisé en ce que** la charge claire est la silice.

4. Mélange de caoutchouc selon l'une quelconque des revendications 1 à 3, **caractérisé en ce que** la charge sombre est un noir de carbone.

5. Mélange de caoutchouc selon l'une quelconque des revendications 1 à 4, **caractérisé en ce que** le plastifiant, qui présente une teneur en oxygène de 0 à 7 % en poids et qui provient d'une huile d'origine non fossile, est produit par transformation thermique d'huile de colza.

6. Mélange de caoutchouc selon l'une quelconque des revendications 1 à 5, **caractérisé en ce que** le plastifiant, qui présente une teneur en oxygène de 0 à 7 % en poids et qui provient d'une huile d'origine non fossile, est présent après la fin de la transformation thermique sous la forme d'une fraction d'huile lourde dans la phase de fond.

7. Pneu automobile, **caractérisé en ce qu'**il contient au moins un mélange de caoutchouc selon l'une quelconque des revendications 1 à 6 dans au moins un composant.

8. Utilisation d'un mélange de caoutchouc selon l'une quelconque des revendications 1 à 6 pour la fabrication d'un pneu automobile.
